# EUROPEAN PATENT APPLICATION

(11) **EP 4 821 622 A1**
(43) Date of publication of application: **14.10.2026**
(21) Application number: 24900314.6
(22) Date of filing: 23.10.2024
(51) Int. Cl.: B23D 61/02, B23D 47/00, B24D 5/00, B27B 33/08

(54) **DISK-SHAPED ROTARY TOOL**

(30) Priority: 04.12.2023 JP 2023204516
(71) Applicant: Kanefusa Kabushiki Kaisha, Ohguchi-cho, Niwa-gun Aichi 480-0192 (JP)
(72) Inventor: ASAKA, Keiichi, Niwa-gun, Aichi 480-0192 (JP)
(74) Representative: Maikowski & Ninnemann Patentanwälte Partnerschaft mbB
(86) International application number: PCT/JP2024/037671
(87) International publication number: WO 2025/121018

(57) **Abstract**

A disk-shaped rotary tool (1) has a plurality of slits (10) provided in a disk-shaped base metal (2). The plurality of slits (10) includes a plurality of first slits (11) that are elongated in a circumferential direction and arranged in the circumferential direction within a first annular zone (13) of the base metal (2) and not radially overlapping with each other. The plurality of slits (10) includes a plurality of second slits (12) arranged within a second annular zone (14) so as to radially overlap with or be in contact with arcuate end portions (11b, 11c) of each of the plurality of first slits (11). At least one slit (10) is present over the entire circumferential length of the base metal (2).

## Description

### [TECHNICAL FIELD]

The present disclosure relates to a disk-shaped rotary tool used for, for example, machining of wood, wood-based materials, synthetic resin materials, ferrous materials, non-ferrous metals, and the like.

### [BACKGROUND ART]

Conventionally, as this type of disk-shaped rotary tool, for example, a circular saw blade in which a plurality of teeth are arranged along an outer peripheral edge of a disk-shaped base metal has been provided. JP4136893B describes a circular saw blade in which a plurality of elongated hole-shaped slits are formed in the base metal. By providing the slits, it is possible to enhance the vibration damping property of the base metal and to increase the critical rotational speed of the circular saw blade. By enhancing the vibration damping property of the base metal, it is possible to suppress the generation of vibration that adversely affects the quality of the cut surface. In addition, noise generated during cutting of a workpiece may be suppressed. By increasing the critical rotational speed of the circular saw blade, i.e., the rotational speed at which buckling occurs in the circular saw blade, the circular saw blade may be used at a high rotational speed even when the thickness of the circular saw blade is reduced. Furthermore, for example, by filling the slits with resin, the vibration damping property may be enhanced.

As described in JP4136893B, the slits provided in a conventional circular saw blade are, for example, S-shaped. The slits extend substantially in the circumferential direction but include portions inclined with respect to the circumferential direction. The plurality of slits are arranged in a single row in the circumferential direction. The end portion of a slit on the front side in the rotation direction is substantially aligned in the radial direction with the end portion of the adjacent slit on the rear side in the rotation direction. The critical rotational speed improves as the number of slits increases.

In the case of slits having a conventional shape, increasing the number of slits shortens the distance between the slits. Therefore, there has been a limit to the number of slits that may be provided. Consequently, there has been a limit to the improvement in the critical rotational speed of the circular saw blade.

In the conventionally shaped slits described in JP4136893B, the centrifugal force during rotation causes the base metal to be stretched radially outward, creating gaps in the slits, and chips may become clogged particularly at portions inclined with respect to the circumferential direction. If the tool is used while chips remain clogged, the base metal may become bent. Clogging of chips may be suppressed to some extent by filling the slits with resin. However, for example, when the chips are harder than the resin, such as aluminum powder, the chips may cut through the resin at the inclined portions of the slits and enter the slits. Therefore, chip clogging cannot be sufficiently suppressed. Accordingly, there has been room for improvement in order to suppress chip clogging.

In conventionally shaped slits, cracks may occur in the base metal from the end portions of the slits due to tensile stress caused by centrifugal force during rotation. When the end portions of adjacent slits are aligned radially and are close to each other, cracks are more likely to occur in the base metal in the region between both end portions. Therefore, there has been room for improvement in order to suppress cracks in the base metal.

### [SUMMARY OF THE INVENTION]

### [PROBLEM TO BE SOLVED BY THE INVENTION]

The present disclosure has been completed in view of the above circumstances, and a problem to be solved is to provide a disk-shaped rotary tool capable of suppressing chip clogging and cracking in the slit portions while increasing the critical rotational speed.

### [MEANS FOR SOLVING THE PROBLEM]

According to one aspect of the present disclosure, a disk-shaped rotary tool has a plurality of slits provided in a disk-shaped base metal. The plurality of slits includes a plurality of first slits that are elongated in a circumferential direction and arranged in the circumferential direction within a first annular zone of the base metal, and not radially overlapping with each other. The plurality of slits includes a plurality of other slits arranged within other annular zones so as to radially overlap with or be in contact with both ends of each of the plurality of first slits. At least one of the slits is present over the entire circumferential length of the base metal.

The first annular zone is located, for example, between two concentric circles centered on the center of the base metal. The other annular zones are located radially outside or inside the first annular zone and are located, for example, between two concentric circles centered on the center of the base metal. The other slits located in the other annular zones cooperate with the first slits so that at least one slit is present over the entire circumferential length of the base metal.

Accordingly, the plurality of first slits is arranged in the first annular zone, and the plurality of other slits is arranged in the other annular zones. This allows more slits to be provided in the base metal. Therefore, the base metal expands radially outward more easily when rotating and subjected to centrifugal force. The more easily the base metal expands radially outward, the higher the critical rotational speed of the disk-shaped rotary tool may be raised. Furthermore, by providing a plurality of other annular zones each having slits, the base metal expands even more easily radially outward. Therefore, the base metal may be subjected to a greater centrifugal force. This makes it possible to further increase the critical rotational speed of the disk-shaped rotary tool.

According to another aspect of the present disclosure, the base metal has 2 to 4 layers of annular zones arranged in the radial direction, each annular zone having a plurality of slits. For example, a second annular zone is provided radially outside the first annular zone, and a plurality of second slits elongated in the circumferential direction, arranged in the circumferential direction, and not radially overlapping with each other are provided within the second annular zone. A third annular zone is provided radially outside the second annular zone, and a plurality of third slits elongated in the circumferential direction, arranged in the circumferential direction, and not radially overlapping with each other are provided within the third annular zone. The plurality of first slits, the plurality of second slits, and the plurality of third slits are arranged so that at least one thereof is present over the entire circumferential length of the base metal.

Accordingly, the annular zones in which the plurality of slits are arranged in the circumferential direction may be stacked 2 to 4 layers in the radial direction. This makes it easier for the base metal to expand radially outward. In addition, by not stacking 5 or more layers, the rigidity of the base metal against stress in the axial direction may be ensured. Thus, the critical rotational speed of the disk-shaped rotary tool may be increased while maintaining the rigidity of the base metal.

According to another aspect of the present disclosure, each of the plurality of first slits has a slit body located on and extending along a common first imaginary circle. Each of the plurality of other slits has a slit body located on and extending along a common other imaginary circle. The first imaginary circle may be, for example, a circle centered on the center of the base metal. The other imaginary circle may be located, for example, radially outside the first imaginary circle and is a circle centered on the center of the base metal. The line width of the imaginary circle may be, for example, 1 mm, 3 mm, or 5 mm.

Accordingly, the slit bodies of the plurality of first slits are arranged on the first imaginary circle, and the slit bodies of the plurality of other slits are arranged on the other imaginary circle. This makes it possible to reduce the radial width of the annular zones in which the plurality of first slits and the plurality of other slits are provided. Therefore, even in a narrow area, a plurality of annular zones may be efficiently stacked in the radial direction. This makes it possible to increase the number of slits provided in the base metal and allows the base metal to expand more easily radially outward. This makes it possible to increase the critical rotational speed of the disk-shaped rotary tool.

In addition, the slit bodies are not inclined with respect to the circumferential direction. It has been found through intensive research that chips tend to clog at inclined portions of the slits that include components extending in the radial direction. Therefore, it is possible to suppress chip clogging from occurring in the slit bodies. This makes it possible to suppress the occurrence of distortion in the base metal that is harmful to cutting due to chip clogging.

According to another aspect of the present disclosure, each of both circumferential ends of the plurality of other slits radially overlaps with the corresponding first slit over an angle corresponding to 1/3 to 1/1 of the central angle of the corresponding first slit. By setting this range, the critical rotational speed of the disk-shaped rotary tool may be sufficiently increased.

According to another aspect of the present disclosure, each of the plurality of first slits and each of the plurality of other slits has a slit body with a width of 2.0 mm or less and an arcuate end portion with a diameter larger than the width of the slit body. By providing arcuate end portions at the ends of the slits, stress concentration at the ends of the slits may be suppressed. This makes it possible to suppress the occurrence of cracks particularly at the ends of the slits where cracks are most likely to occur. Furthermore, by providing the slits with a width that allows them to be filled with resin, the vibration damping property of the disk-shaped rotary tool may be enhanced.

According to another aspect of the present disclosure, each of the plurality of first slits and each of the plurality of other slits has a slit body with a width of 1.0 mm to 10.0 mm and an arcuate end portion with a diameter substantially equal to the width of the slit body. By providing arcuate end portions at the ends of the slits, stress concentration at the ends of the slits may be suppressed, thereby suppressing the occurrence of cracks. Furthermore, by providing through-holes with a width through which chips can pass without filling the slits with resin or the like, deformation of the base metal due to chips clogging in the disk-shaped rotary tool may be suppressed.

### [BRIEF DESCRIPTION OF DRAWINGS]

[FIG. 1] A side view of a disk-shaped rotary tool according to a first embodiment.
[FIG. 2] A side view of a disk-shaped rotary tool according to a second embodiment.
[FIG. 3] A side view of a disk-shaped rotary tool according to a third embodiment.
[FIG. 4] A side view of a disk-shaped rotary tool according to a fourth embodiment.
[FIG. 5] A side view of a disk-shaped rotary tool according to a fifth embodiment.
[FIG. 6] A side view of a disk-shaped rotary tool according to a sixth embodiment.
[FIG. 7] A side view of a disk-shaped rotary tool according to a seventh embodiment.
[FIG. 8] A side view of a disk-shaped rotary tool according to an eighth embodiment.
[FIG. 9] A graph showing a relationship between a number of slits stacked in a radial direction and critical rotational speed.
[FIG. 10] A graph showing a relationship between the number of slits stacked in the radial direction and maximum displacement in an axial direction of the base metal.
[FIG. 11] A graph showing a relationship between an angle at which the first slit and the other slits radially overlap and the critical rotational speed.
[FIG. 12] A graph showing a relationship between the angle at which the first slit and the other slits radially overlap and maximum von Mises stress of the base metal.
[FIG. 13] A graph showing a relationship between a ratio of a distance between an annular zone to a radius of an outer periphery of the disk-shaped rotary tool and the critical rotational speed.
[FIG. 14] A graph showing a relationship between the ratio of the distance between the annular zone to the radius of the outer periphery of the disk-shaped rotary tool and the maximum displacement of the base metal.
[FIG. 15] A graph showing a relationship between a diameter of an arcuate end portion and maximum stress generated in the base metal under tensile stress.
[FIG. 16] A graph showing a relationship between the diameter of the arcuate end portion and maximum stress generated in the base metal under bending load.

### [DETAILED DESCRIPTION OF THE PREFERRED EMBODIMENTS]

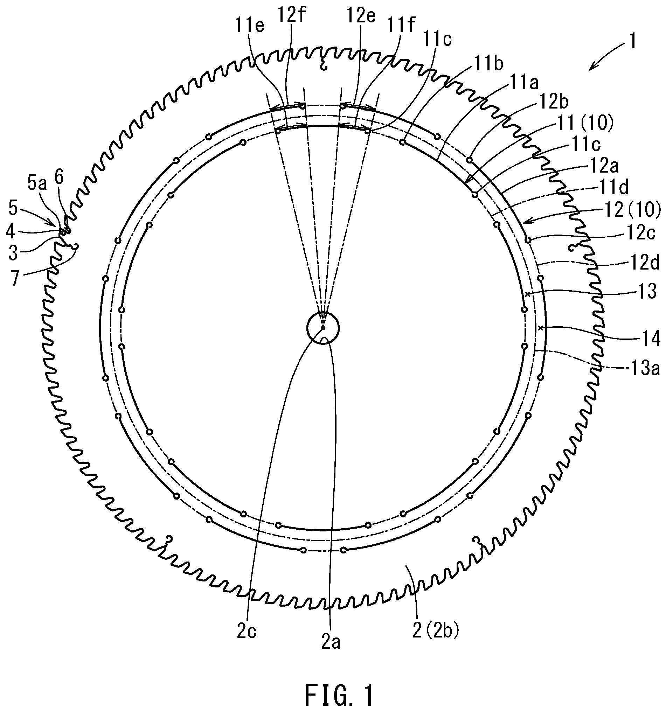

One embodiment of the present disclosure will be described with reference to FIG. 1. Identical reference numerals used in the description refer to identical elements having the same functions, and redundant descriptions thereof are omitted. As an example of the disk-shaped rotary tool 1, a circular saw blade referred to as a tipped saw blade is illustrated. As shown in FIG. 1, the disk-shaped rotary tool 1 has a disk-shaped base metal 2 and a plurality of tips 5 mounted on an outer peripheral edge 2b of the base metal 2. By rotating the base metal 2, each tip 5 forms a groove in a workpiece and ultimately cuts the workpiece. The workpiece may be, for example, wood, wood-based materials such as wood-based board, synthetic resin materials, ceramics-based materials, ferrous materials such as carbon steel, general structural rolled steel, chromium molybdenum steel, stainless steel, and cast iron, or non-ferrous metals such as aluminum, aluminum alloys, copper, and copper alloys.

As shown in FIG. 1, a substantially circular mounting hole 2a penetrating in the axial direction (thickness direction) of the base metal 2 is provided in the central portion of the base metal 2. A rotation shaft of a disk-shaped rotary tool cutting unit is inserted into the mounting hole 2a. The disk-shaped rotary tool 1 rotates in the clockwise direction in the figure to cut the workpiece. An outer diameter of the disk-shaped rotary tool 1 may be, for example, 200 mm to 1,000 mm, and may be for example 355 mm. The base metal 2 is made of steel, for example, alloy tool steel. A blade thickness of the disk-shaped rotary tool 1 corresponds to a thickness of the tips 5 and may be, for example, 0.8 mm to 12.0 mm, and may be, for example, 2.0 mm. The base metal 2 has a plurality of tooth bodies 3 protruding radially outward from an outer peripheral edge 2b of the disk-shaped body. The plurality of tooth bodies 3 are formed at regular intervals in the circumferential direction of the outer peripheral edge 2b. The thickness of the base metal 2 is slightly smaller than the thickness of the tips 5 and may be, for example, 0.6 mm to 10.0 mm, for example 1.5 mm.

As shown in FIG. 1, a gullet 6 is provided between two adjacent tooth bodies 3. A tip seat 4 opening in radially outward and in one circumferential direction in the forward direction of rotation is formed in the tooth body 3. One tip 5 is attached to each tip seat 4. For example, 20 to 200 tips 5, for example 120 tips, are attached to the base metal 2 by brazing or the like. Note that in the drawing, for convenience of description, a tip 5 is mounted on only one tooth body 3, but in practice, tips 5 are mounted on all tooth bodies 3. The tip 5 is a hard tip formed of, for example, cemented carbide, cermet, polycrystalline diamond (PCD) sintered body, Borazon (CBN) sintered body, or the like. A cutting edge 5a is provided at a tip end of the substantially rectangular parallelepiped tip 5. The cutting edge 5a is located at the radially outer end and the front end in the rotation direction of the tip 5.

As shown in FIG. 1, the base metal 2 is provided with a plurality of outer slits 7 extending radially inward from a bottom of the gullet 6. The outer slits 7 are provided, for example, one for every 24 gullets 6, for a total of five. A width of the outer slit 7 may be, for example, 0.1 mm to 2.0 mm, for example 0.2 mm. A radially inner end of the outer slit 7 curves in a substantially C-shape, for example, with a diameter larger than the width of the outer slit 7. This makes it possible to suppress stress concentration at the radially inner end of the outer slit 7 and to suppress the occurrence of cracks.

As shown in FIG. 1, the base metal 2 is provided with a plurality of slits (internal slits) 10 extending in a circumferential direction. The plurality of slits 10 includes a plurality of first slits 11 arranged in the circumferential direction and a plurality of second slits 12 arranged in the circumferential direction radially outward of the plurality of first slits 11. The plurality of first slits 11 and the plurality of second slits 12 are provided, for example, 6 to 14 each, for example 10 each. A first boundary 13a of an imaginary circle centered on the base metal center 2c is set on a side surface of the base metal 2. All of the plurality of first slits 11 are arranged in a first annular zone 13 located radially inward of the first boundary 13a. On the other hand, all of the plurality of second slits 12 are arranged in a second annular zone 14 located radially outward of the first boundary 13a.

As shown in FIG. 1, the first slit 11 has a slit body 11a extending in an arc shape in the circumferential direction. All of the slit bodies 11a of the plurality of first slits 11 are arranged on the same first imaginary circle 11d centered on the base metal center 2c. A width of the slit body 11a may be, for example, 0.1 mm to 2.0 mm, for example 0.2 mm. A diameter of the first imaginary circle 11d may be, for example, 65% to 85% of the outer diameter of the disk-shaped rotary tool 1, for example 72%. A subtended angle of one first slit 11 centered on the base metal center 2c may be, for example, 20° to 35°, for example 27°. The slit body 11a extends in the circumferential direction over a length of 70% or more of the entire circumferential length of the first slit 11. The slit body 11a extends in the circumferential direction over a length of, for example, 98% or less of the entire circumferential length of the first slit 11. The plurality of first slits 11 are provided at predetermined intervals on the first imaginary circle 11d.

As shown in FIG. 1, the first slit 11 has an arcuate end portion 11b at a rear end in the rotation direction of the slit body 11a (the counterclockwise end in the drawing). The first slit 11 has an arcuate end portion 11c at a front end in the rotation direction of the slit body 11a (the clockwise end in the drawing). The arcuate end portions 11b and 11c curve in a substantially C-shape with a diameter larger than the width of the slit body 11a. The arcuate end portions 11b and 11c each open on the radially inner side. Radii of the arcuate end portions 11b and 11c are, for example, 1.0 mm to 10.0 mm, more preferably 2.0 mm to 4.0 mm, for example 2.0 mm. A slit width of the arcuate end portions 11b and 11c is substantially the same as the width of the slit body 11a. The substantially C-shaped arcuate end portions 11b and 11c have, for example, a stress-dispersing effect similar to that of circular holes, and because the width is narrow, entry of chips into the arcuate end portions 11b and 11c may be suppressed. By filling the slit body 11a and the arcuate end portions 11b and 11c with resin, the vibration damping property of the base metal 2 may be enhanced and entry of chips into the first slit 11 may be further suppressed.

As shown in FIG. 1, the second slit 12 has a slit body 12a extending in an arc shape in the circumferential direction. All of the slit bodies 12a of the plurality of second slits 12 are arranged on the same second imaginary circle 12d centered on the base metal center 2c. A width of the slit body 12a may be, for example, 0.1 mm to 2.0 mm, for example 0.2 mm. A diameter of the second imaginary circle 12d may be, for example, 70% to 90% of the outer diameter of the disk-shaped rotary tool 1, for example 80%. The subtended angle of one second slit 12 centered on the base metal center 2c may be, for example, 20° to 35°, for example 27°. The slit body 12a extends in the circumferential direction over a length of 70% or more of the entire circumferential length of the second slit 12. The slit body 12a extends in the circumferential direction over a length of, for example, 98% or less of the entire circumferential length of the second slit 12. The plurality of second slits 12 are provided at predetermined intervals on the second imaginary circle 12d.

As shown in FIG. 1, the second slit 12 has an arcuate end portion 12b at a rear end in the rotation direction of the slit body 12a and an arcuate end portion 12c at a front end in the rotation direction of the slit body 12a. The arcuate end portions 12b and 12c curve in a substantially C-shape with a diameter larger than the width of the slit body 12a. The arcuate end portions 12b and 12c each open on the radially outer side. Radii of the arcuate end portions 12b and 12c are, for example, 1.0 mm to 10.0 mm, more preferably 2.0 mm to 4.0 mm, for example 2.0 mm. A slit width of the arcuate end portions 12b and 12c is substantially the same as the width of the slit body 12a. The substantially C-shaped arcuate end portions 12b and 12c have, for example, a stress-dispersing effect similar to that of circular holes, and because the width is narrow, entry of chips into the arcuate end portions 12b and 12c may be suppressed. By filling the slit body 12a and the arcuate end portions 12b and 12c with resin, the vibration damping property of the base metal 2 may be enhanced and entry of chips into the second slit 12 may be further suppressed.

As shown in FIG. 1, the first slit 11 and the second slit 12 are arranged so as to radially overlap with each other. The first slit 11 radially overlaps with a region of the overlapping width 12f including the arcuate end portion 12c at the front end in the rotation direction of the second slit 12, in a region of the overlapping width 11e including the arcuate end portion 11b at the rear end in the rotation direction. The first slit 11 radially overlaps with a region of the overlapping width 12e including the arcuate end portion 12b at the rear end in the rotation direction of the second slit 12, in a region of the overlapping width 11f including the arcuate end portion 11c at the front end in the rotation direction. The sum of the overlapping widths 11e and 11f of the first slit 11 may be, for example, an angle of 1/3 to 1/1 of the central angle of the first slit 11, more preferably an angle of 1/2 to 4/5, for example an angle of 2/3. The sum of the overlapping widths 12e and 12f of the second slit 12 may be, for example, an angle of 1/3 to 1/1 of the central angle of the second slit 12, more preferably an angle of 1/2 to 4/5, for example an angle of 2/3.

As shown in FIG. 1, the average of the total sum of the central angles of the plurality of first slits 11 and the total sum of the central angles of the plurality of second slits 12 is 180° or more, more preferably 235° to 300°.

As shown in FIG. 1, at least one of either the first slit 11 or the second slit 12 is arranged in any region over the entire circumferential length of the base metal 2 centered on the base metal center 2c. Therefore, when an imaginary line extending radially from the base metal center 2c to the outer peripheral edge 2b of the base metal 2 is drawn, at least one slit 10 extends across the imaginary line.

As described above, the disk-shaped rotary tool 1 has a plurality of slits 10 provided in the disk-shaped base metal 2 as shown in FIG. 1. The plurality of slits 10 include a plurality of first slits 11 that are elongated in the circumferential direction and arranged in the circumferential direction within the first annular zone 13 of the base metal 2 and not radially overlapping with each other. The plurality of slits 10 include a plurality of second slits (other slits) 12 arranged within the second annular zone (other annular zone) 14 so as to radially overlap with or be in contact with the arcuate end portions (each of both ends) 11b and 11c of each of the plurality of first slits 11. At least one slit 10 is present over the entire circumferential length of the base metal 2.

Accordingly, the plurality of first slits 11 are arranged in the first annular zone 13, and the plurality of second slits 12 are arranged in the second annular zone 14. This allows more slits 10 to be provided in the base metal 2. Therefore, the base metal 2 expands radially outward more easily when rotating and subjected to centrifugal force. The more easily the base metal 2 expands radially outward, the higher the critical rotational speed of the disk-shaped rotary tool 1 may be raised. Furthermore, by providing a plurality of other annular zones, the base metal 2 expands even more easily radially outward. Therefore, the base metal 2 may be subjected to a greater centrifugal force. This makes it possible to further increase the critical rotational speed of the disk-shaped rotary tool 1.

As shown in FIG. 1, the base metal 2 has two layers of annular zones 13 and 14 arranged in the radial direction. Accordingly, the annular zones in which the plurality of slits 10 are arranged in the circumferential direction may be stacked two layers in the radial direction. This makes it easier for the base metal 2 to expand radially outward. In addition, by not stacking five or more layers, the rigidity of the base metal 2 against stress in the axial direction may be ensured. Thus, the critical rotational speed of the disk-shaped rotary tool 1 may be increased while maintaining the rigidity of the base metal 2.

As shown in FIG. 1, each of the plurality of first slits 11 has a slit body 11a located on and extending along a common first imaginary circle 11d. Each of the plurality of second slits 12 has a slit body 12a located on and extending along a common second imaginary circle (other imaginary circle) 12d.

Accordingly, the slit bodies 11a of the plurality of first slits 11 are arranged on the first imaginary circle 11d, and the slit bodies 12a of the plurality of second slits 12 are arranged on the second imaginary circle 12d. This makes it possible to reduce the radial width of the annular zones in which the plurality of first slits 11 and the plurality of second slits 12 are provided. Therefore, even in a narrow area, a plurality of annular zones may be efficiently stacked in the radial direction. This makes it possible to increase the number of slits 10 provided in the base metal 2 and allows the base metal 2 to expand more easily radially outward. This makes it possible to increase the critical rotational speed of the disk-shaped rotary tool 1.

Furthermore, the slit bodies 11a and 12a are not inclined with respect to the circumferential direction. It has been found through intensive research that chips tend to clog at inclined portions of the slit 10 that include components extending in the radial direction. Therefore, chip clogging in the slit bodies 11a and 12a may be suppressed. This makes it possible to suppress the occurrence of distortion in the base metal 2 that is harmful to cutting due to chip clogging.

As shown in FIG. 1, each of both circumferential ends of the plurality of second slits 12 radially overlaps with the corresponding first slit 11 over an angle corresponding to 1/3 to 1/1 of the central angle of the corresponding first slit 11. By setting this range, the critical rotational speed of the disk-shaped rotary tool 1 may be sufficiently increased.

As shown in FIG. 1, each of the plurality of first slits 11 and each of the plurality of second slits 12 has a slit body 11a, 12a with a width of 2.0 mm or less and arcuate end portions 11b, 11c, 12b, 12c with a diameter larger than the width of the slit bodies 11a, 12a. By providing the arcuate end portions 11b, 11c, 12b, 12c at the ends of the slits 10, stress concentration at the ends of the slits 10 may be suppressed. This makes it possible to suppress the occurrence of cracks particularly at the ends of the slits 10 where cracks are most likely to occur. Furthermore, by providing the slits 10 with a width that allows them to be filled with resin, the vibration damping property of the disk-shaped rotary tool 1 may be enhanced.

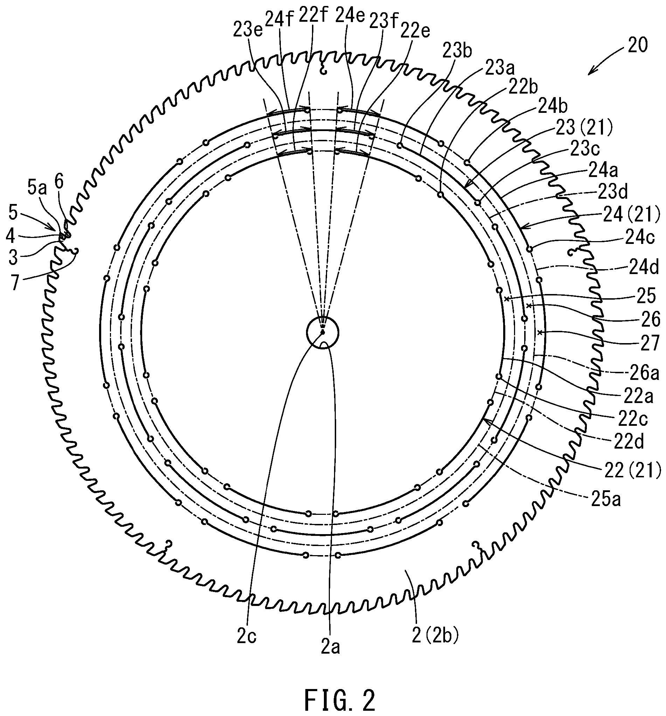

Next, a second embodiment of the present disclosure will be described with reference to FIG. 2. Inside the base metal 2 of the disk-shaped rotary tool 20 of the second embodiment, a plurality of slits (internal slits) 21 are provided in place of the plurality of slits 10 shown in FIG. 1. In the following description, only the portions different from the first embodiment will be described in detail. The plurality of slits 21 includes a plurality of first slits 22 arranged in the circumferential direction, a plurality of second slits 23 arranged in the circumferential direction radially outward of the plurality of first slits 22, and a plurality of third slits 24 arranged in the circumferential direction radially outward of the plurality of second slits 23. The plurality of first slits 22, the plurality of second slits 23, and the third slits 24 are each provided in a quantity of 10.

As shown in FIG. 2, a first boundary 25a and a second boundary 26a of imaginary circles centered on the base metal center 2c are set on a side surface of the base metal 2. All of the plurality of first slits 22 are arranged in a first annular zone 25 located radially inward of the first boundary 25a. All of the plurality of second slits 23 are arranged in a second annular zone 26 located radially outward of the first boundary 25a and radially inward of the second boundary 26a. All of the plurality of third slits 24 are arranged in a third annular zone 27 located radially outward of the second boundary 26a.

As shown in FIG. 2, the first slit 22 has a slit body 22a extending in an arc shape in the circumferential direction. All of the slit bodies 22a of the plurality of first slits 22 are arranged on the same first imaginary circle 22d centered on the base metal center 2c. The width of the slit body 22a may be, for example, 0.1 mm to 2.0 mm, for example 0.2 mm. The diameter of the first imaginary circle 22d may be, for example, 60% to 80% of the outer diameter of the disk-shaped rotary tool 20, for example 65%. The subtended angle of one first slit 22 centered on the base metal center 2c may be, for example, 20° to 35°, for example 27°. The slit body 22a extends in the circumferential direction over a length of 70% or more of the entire circumferential length of the first slit 22. The slit body 22a extends in the circumferential direction over a length of, for example, 98% or less of the entire circumferential length of the first slit 22. The plurality of first slits 22 are provided at predetermined intervals on the first imaginary circle 22d.

As shown in FIG. 2, the first slit 22 has a substantially C-shaped arcuate end portion 22b at the rear end in the rotation direction of the slit body 22a. The first slit 22 has a substantially C-shaped arcuate end portion 22c at the front end in the rotation direction of the slit body 22a. The arcuate end portions 22b and 22c are provided in the same shape and size as the arcuate end portions 11b and 11c (see FIG. 1). The arcuate end portions 22b and 22c each open on the radially inner side.

As shown in FIG. 2, the second slit 23 has a slit body 23a extending in an arc shape in the circumferential direction. All of the slit bodies 23a of the plurality of second slits 23 are arranged on the same second imaginary circle 23d centered on the base metal center 2c. The width of the slit body 23a may be, for example, 0.1 mm to 2.0 mm, for example 0.2 mm. The diameter of the second imaginary circle 23d may be, for example, 65% to 85% of the outer diameter of the disk-shaped rotary tool 20, for example 72%. The subtended angle of one second slit 23 centered on the base metal center 2c may be, for example, 20° to 35°, for example 27°. The slit body 23a extends in the circumferential direction over a length of 70% or more of the entire circumferential length of the second slit 23. The slit body 23a extends in the circumferential direction over a length of, for example, 98% or less of the entire circumferential length of the second slit 23. The plurality of second slits 23 are provided at predetermined intervals on the second imaginary circle 23d.

As shown in FIG. 2, the second slit 23 has a substantially C-shaped arcuate end portion 23b at the rear end in the rotation direction of the slit body 23a. The second slit 23 has a substantially C-shaped arcuate end portion 23c at the front end in the rotation direction of the slit body 23a. The arcuate end portions 23b and 23c are provided in the same shape and size as the arcuate end portions 11b and 11c (see FIG. 1). The arcuate end portions 23b and 23c each open on the radially inner side.

As shown in FIG. 2, the third slit 24 has a slit body 24a extending in an arc shape in the circumferential direction. All of the slit bodies 24a of the plurality of third slits 24 are arranged on the same third imaginary circle 24d centered on the base metal center 2c. The width of the slit body 24a may be, for example, 0.1 mm to 2.0 mm, for example 0.2 mm. The diameter of the third imaginary circle 24d may be, for example, 70% to 90% of the outer diameter of the disk-shaped rotary tool 20, for example 79%. The radial spacing between the first imaginary circle 22d and the second imaginary circle 23d is substantially the same as the radial spacing between the second imaginary circle 23d and the third imaginary circle 24d. The subtended angle of one third slit 24 centered on the base metal center 2c may be, for example, 20° to 35°, for example 27°. The slit body 24a extends in the circumferential direction over a length of 70% or more of the entire circumferential length of the third slit 24. The slit body 24a extends in the circumferential direction over a length of, for example, 98% or less of the entire circumferential length of the third slit 24. The plurality of third slits 24 are provided at predetermined intervals on the third imaginary circle 24d.

As shown in FIG. 2, the third slit 24 has a substantially C-shaped arcuate end portion 24b at the rear end in the rotation direction of the slit body 24a. The third slit 24 has a substantially C-shaped arcuate end portion 24c at the front end in the rotation direction of the slit body 24a. The arcuate end portions 24b and 24c are provided in the same shape and size as the arcuate end portions 12b and 12c (see FIG. 1). The arcuate end portions 24b and 24c each open on the radially outer side. By filling the slit bodies 22a, 23a, 24a and the arcuate end portions 22b, 22c, 23b, 23c, 24b, 24c of each slit 21 with resin, the vibration damping property of the base metal 2 may be enhanced and entry of chips into the slits 21 may be further suppressed.

As shown in FIG. 2, the first slit 22 and the second slit 23 are arranged so as to radially overlap with each other. The first slit 22 radially overlaps with a region of the overlapping width 23f including the arcuate end portion 23c at the front end in the rotation direction of the second slit 23, in a region of the overlapping width 22e including the arcuate end portion 22b at the rear end in the rotation direction. The first slit 22 radially overlaps with a region of the overlapping width 23e including the arcuate end portion 23b at the rear end in the rotation direction of the second slit 23, in a region of the overlapping width 22f including the arcuate end portion 22c at the front end in the rotation direction. The sum of the overlapping widths 22e and 22f of the first slit 22 may be, for example, an angle of 1/3 to 1/1 of the central angle of the first slit 22, more preferably an angle of 1/2 to 4/5, for example an angle of 2/3. The sum of the overlapping widths 23e and 23f of the second slit 23 may be, for example, an angle of 1/3 to 1/1 of the central angle of the second slit 23, more preferably an angle of 1/2 to 4/5, for example an angle of 2/3.

As shown in FIG. 2, the second slit 23 and the third slit 24 are arranged so as to radially overlap with each other. The region of the overlapping width 23e of the second slit 23 radially overlaps with the region of the overlapping width 24f including the arcuate end portion 24c at the front end in the rotation direction of the third slit 24. The region of the overlapping width 23f of the second slit 23 radially overlaps with the region of the overlapping width 24e including the arcuate end portion 24b at the rear end in the rotation direction of the third slit 24. The sum of the overlapping widths 24e and 24f of the third slit 24 may be, for example, an angle of 1/3 to 1/1 of the central angle of the third slit 24, more preferably an angle of 1/2 to 4/5, for example an angle of 2/3.

As shown in FIG. 2, the average of the total sum of the central angles of the plurality of first slits 22, the total sum of the central angles of the plurality of second slits 23, and the total sum of the central angles of the plurality of third slits 24 is 180° or more, more preferably 235° to 300°.

As shown in FIG. 2, the first slit 22 and the third slit 24 are arranged so that substantially all of them radially overlap with each other. The arcuate end portions 22b and 22c of the first slit 22 and the arcuate end portions 24b and 24c of the third slit 24, respectively, radially overlap with each other. At least one of either the first slit 22, the second slit 23, or the third slit 24 is arranged in any region over the entire circumferential length of the base metal 2 centered on the base metal center 2c. Therefore, when an imaginary line extending radially from the base metal center 2c to the outer peripheral edge 2b of the base metal 2 is drawn, at least one slit 21 extends across the imaginary line.

According to the disk-shaped rotary tool 20 described above, the same effects as those of the disk-shaped rotary tool 1 shown in FIG. 1 are achieved. Furthermore, by arranging the plurality of slits 21 extending in the circumferential direction in three layers in the radial direction, the base metal 2 expands even more easily radially outward due to centrifugal force. This makes it possible to further increase the critical rotational speed of the disk-shaped rotary tool 20.

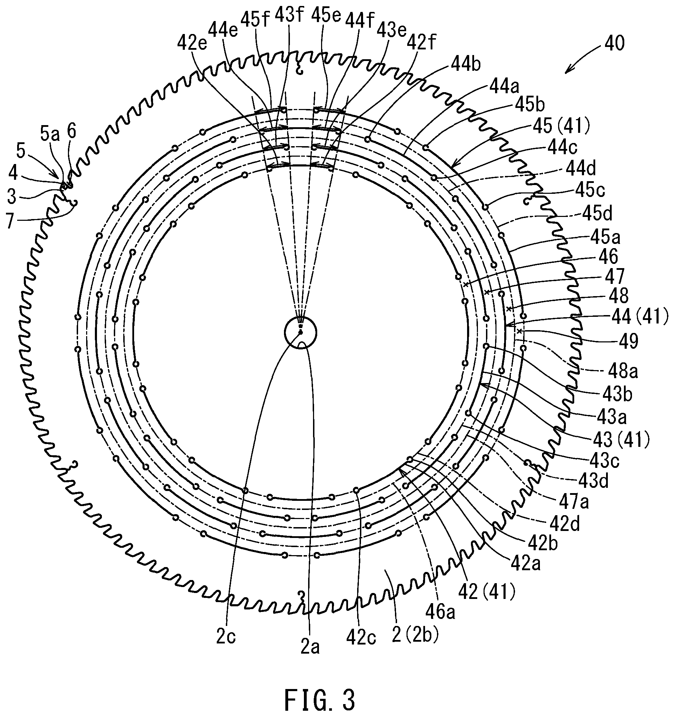

Next, a third embodiment of the present disclosure will be described with reference to FIG. 3. In the base metal 2 of the disk-shaped rotary tool 40 of the third embodiment, a plurality of slits (internal slits) 41 are provided in place of the plurality of slits 10 shown in FIG. 1. In the following description, only the portions different from the first embodiment will be described in detail. The plurality of slits 41 includes a plurality of first slits 42 arranged in the circumferential direction and a plurality of second slits 43 arranged in the circumferential direction radially outward of the plurality of first slits 42. The plurality of slits 41 includes a plurality of third slits 44 arranged in the circumferential direction radially outward of the plurality of second slits 43 and a plurality of fourth slits 45 arranged in the circumferential direction radially outward of the plurality of third slits 44. The plurality of first slits 42, the plurality of second slits 43, the third slits 44, and the plurality of fourth slits 45 are each provided in a quantity of 12.

As shown in FIG. 3, a first boundary 46a, a second boundary 47a, and a third boundary 48a of imaginary circles centered on the base metal center 2c on a side surface of the base metal 2 will be considered. All of the plurality of first slits 42 are arranged in a first annular zone 46 located radially inward of the first boundary 46a. All of the plurality of second slits 43 are arranged in a second annular zone 47 located radially outward of the first boundary 46a and radially inward of the second boundary 47a. All of the plurality of third slits 44 are arranged in a third annular zone 48 located radially outward of the second boundary 47a and radially inward of the third boundary 48a. All of the plurality of fourth slits 45 are arranged in a fourth annular zone 49 located radially outward of the third boundary 48a.

As shown in FIG. 3, the first slit 42 has a slit body 42a extending in an arc shape in the circumferential direction. All of the slit bodies 42a of the plurality of first slits 42 are arranged on the same first imaginary circle 42d centered on the base metal center 2c. The width of the slit body 42a may be, for example, 0.1 mm to 2.0 mm, for example 0.2 mm. The diameter of the first imaginary circle 42d may be, for example, 55% to 75% of the outer diameter of the disk-shaped rotary tool 40, for example 60%. The subtended angle of one first slit 42 centered on the base metal center 2c may be, for example, 20° to 35°, for example 20°. The slit body 42a extends in the circumferential direction over a length of 70% or more of the entire circumferential length of the first slit 42. The slit body 42a extends in the circumferential direction over a length of, for example, 98% or less of the entire circumferential length of the first slit 42. The plurality of first slits 42 are provided at predetermined intervals on the first imaginary circle 42d.

As shown in FIG. 3, the first slit 42 has a substantially C-shaped arcuate end portion 42b at the rear end in the rotation direction of the slit body 42a. The first slit 42 has a substantially C-shaped arcuate end portion 42c at the front end in the rotation direction of the slit body 42a. The arcuate end portions 42b and 42c are provided in the same shape and size as the arcuate end portions 11b and 11c (see FIG. 1). The arcuate end portions 42b and 42c each open on the radially inner side.

As shown in FIG. 3, the second slit 43 has a slit body 43a extending in an arc shape in the circumferential direction. All of the slit bodies 43a of the plurality of second slits 43 are arranged on the same second imaginary circle 43d centered on the base metal center 2c. The width of the slit body 43a may be, for example, 0.1 mm to 2.0 mm, for example 0.2 mm. The diameter of the second imaginary circle 43d may be, for example, 60% to 80% of the outer diameter of the disk-shaped rotary tool 40, for example 66%. The subtended angle of one second slit 43 centered on the base metal center 2c may be, for example, 20° to 35°, for example 20°. The slit body 43a extends in the circumferential direction over a length of 70% or more of the entire circumferential length of the second slit 43. The slit body 43a extends in the circumferential direction over a length of, for example, 98% or less of the entire circumferential length of the second slit 43. The plurality of second slits 43 are provided at predetermined intervals on the second imaginary circle 43d.

As shown in FIG. 3, the second slit 43 has a substantially C-shaped arcuate end portion 43b at the rear end in the rotation direction of the slit body 43a. The second slit 43 has a substantially C-shaped arcuate end portion 43c at the front end in the rotation direction of the slit body 43a. The arcuate end portions 43b and 43c are provided in the same shape and size as the arcuate end portions 11b and 11c (see FIG. 1). The arcuate end portions 43b and 43c each open on the radially inner side.

As shown in FIG. 3, the third slit 44 has a slit body 44a extending in an arc shape in the circumferential direction. All of the slit bodies 44a of the plurality of third slits 44 are arranged on the same third imaginary circle 44d centered on the base metal center 2c. The width of the slit body 44a may be, for example, 0.1 mm to 2.0 mm, for example 0.2 mm. The diameter of the third imaginary circle 44d may be, for example, 65% to 85% of the outer diameter of the disk-shaped rotary tool 40, for example 73%. The subtended angle of one third slit 44 centered on the base metal center 2c may be, for example, 20° to 35°, for example 20°. The slit body 44a extends in the circumferential direction over a length of 70% or more of the entire circumferential length of the third slit 44. The slit body 44a extends in the circumferential direction over a length of, for example, 98% or less of the entire circumferential length of the third slit 44. The plurality of third slits 44 are provided at predetermined intervals on the third imaginary circle 44d.

As shown in FIG. 3, the third slit 44 has a substantially C-shaped arcuate end portion 44b at the rear end in the rotation direction of the slit body 44a. The third slit 44 has a substantially C-shaped arcuate end portion 44c at the front end in the rotation direction of the slit body 44a. The arcuate end portions 44b and 44c are provided in the same shape and size as the arcuate end portions 11b and 11c (see FIG. 1). The arcuate end portions 44b and 44c each open on the radially inner side.

As shown in FIG. 3, the fourth slit 45 has a slit body 45a extending in an arc shape in the circumferential direction. All of the slit bodies 45a of the plurality of fourth slits 45 are arranged on the same fourth imaginary circle 45d centered on the base metal center 2c. The width of the slit body 45a may be, for example, 0.1 mm to 2.0 mm, for example 0.2 mm. The diameter of the fourth imaginary circle 45d may be, for example, 70% to 90% of the outer diameter of the disk-shaped rotary tool 40, for example 79%. The radial spacing between the first imaginary circle 42d and the second imaginary circle 43d, the radial spacing between the second imaginary circle 43d and the third imaginary circle 44d, and the spacing between the third imaginary circle 44d and the fourth imaginary circle 45d are substantially the same as each other. The subtended angle of one fourth slit 45 centered on the base metal center 2c may be, for example, 20° to 35°, for example 20°. The slit body 45a extends in the circumferential direction over a length of 70% or more of the entire circumferential length of the fourth slit 45. The slit body 45a extends in the circumferential direction over a length of, for example, 98% or less of the entire circumferential length of the fourth slit 45. The plurality of fourth slits 45 are provided at predetermined intervals on the fourth imaginary circle 45d.

As shown in FIG. 3, the fourth slit 45 has a substantially C-shaped arcuate end portion 45b at the rear end in the rotation direction of the slit body 45a. The fourth slit 45 has a substantially C-shaped arcuate end portion 45c at the front end in the rotation direction of the slit body 45a. The arcuate end portions 45b and 45c are provided in the same shape and size as the arcuate end portions 12b and 12c (see FIG. 1). The arcuate end portions 45b and 45c each open on the radially outer side. By filling the slit bodies 42a, 43a, 44a, 45a and the arcuate end portions 42b, 42c, 43b, 43c, 44b, 44c, 45b, 45c of each slit 41 with resin, the vibration damping property of the base metal 2 may be enhanced and entry of chips into the slits 41 may be further suppressed.

As shown in FIG. 3, the first slit 42 and the second slit 43 are arranged so as to radially overlap with each other. The first slit 42 radially overlaps with a region of the overlapping width 43f including the arcuate end portion 43c at the front end in the rotation direction of the second slit 43, in a region of the overlapping width 42e including the arcuate end portion 42b at the rear end in the rotation direction. The first slit 42 radially overlaps with a region of the overlapping width 43e including the arcuate end portion 43b at the rear end in the rotation direction of the second slit 43, in a region of the overlapping width 42f including the arcuate end portion 42c at the front end in the rotation direction. The sum of the overlapping widths 42e and 42f of the first slit 42 may be, for example, an angle of 1/3 to 1/1 of the central angle of the first slit 42, more preferably an angle of 1/2 to 4/5, for example an angle of 2/3. The sum of the overlapping widths 43e and 43f of the second slit 43 may be, for example, an angle of 1/3 to 1/1 of the central angle of the second slit 43, more preferably an angle of 1/2 to 4/5, for example an angle of 2/3.

As shown in FIG. 3, the second slit 43 and the third slit 44 are arranged so as to radially overlap with each other. The region of the overlapping width 43e of the second slit 43 radially overlaps with the region of the overlapping width 44f including the arcuate end portion 44c at the front end in the rotation direction of the third slit 44. The region of the overlapping width 43f of the second slit 43 radially overlaps with the region of the overlapping width 44e including the arcuate end portion 44b at the rear end in the rotation direction of the third slit 44. The sum of the overlapping widths 44e and 44f of the third slit 44 may be, for example, an angle of 1/3 to 1/1 of the central angle of the third slit 44, more preferably an angle of 1/2 to 4/5, for example an angle of 2/3.

As shown in FIG. 3, the third slit 44 and the fourth slit 45 are arranged so as to radially overlap with each other. The region of the overlapping width 44e of the third slit 44 radially overlaps with the region of the overlapping width 45f including the arcuate end portion 45c at the front end in the rotation direction of the fourth slit 45. The region of the overlapping width 44f of the third slit 44 radially overlaps with the region of the overlapping width 45e including the arcuate end portion 45b at the rear end in the rotation direction of the fourth slit 45. The sum of the overlapping widths 45e and 45f of the fourth slit 45 may be, for example, an angle of 1/3 to 1/1 of the central angle of the fourth slit 45, more preferably an angle of 1/2 to 4/5, for example an angle of 2/3.

As shown in FIG. 3, the average of the total sum of the central angles of the plurality of first slits 42, the total sum of the central angles of the plurality of second slits 43, the total sum of the central angles of the plurality of third slits 44, and the total sum of the central angles of the plurality of fourth slits 45 is 180° or more, more preferably 235° to 300°.

As shown in FIG. 3, the first slit 42 and the third slit 44 are arranged so that substantially all of them radially overlap with each other. The arcuate end portions 42b and 42c of the first slit 42 and the arcuate end portions 44b and 44c of the third slit 44, respectively, radially overlap with each other. The second slit 43 and the fourth slit 45 are arranged so that substantially all of them radially overlap with each other. The arcuate end portions 43b and 43c of the second slit 43 and the arcuate end portions 45b and 45c of the fourth slit 45, respectively, radially overlap with each other. At least one of either the first slit 42, the second slit 43, or the third slit 44 is arranged in any region over the entire circumferential length of the base metal 2 centered on the base metal center 2c. Therefore, when an imaginary line extending radially from the base metal center 2c to the outer peripheral edge 2b of the base metal 2 is drawn, at least one slit 41 extends across the imaginary line.

According to the disk-shaped rotary tool 40 described above, the same effects as those of the disk-shaped rotary tool 1 shown in FIG. 1 are achieved. Furthermore, by arranging the plurality of slits 41 extending in the circumferential direction in four layers in the radial direction, the base metal 2 expands even more easily radially outward due to centrifugal force. This makes it possible to further increase the critical rotational speed of the disk-shaped rotary tool 40.

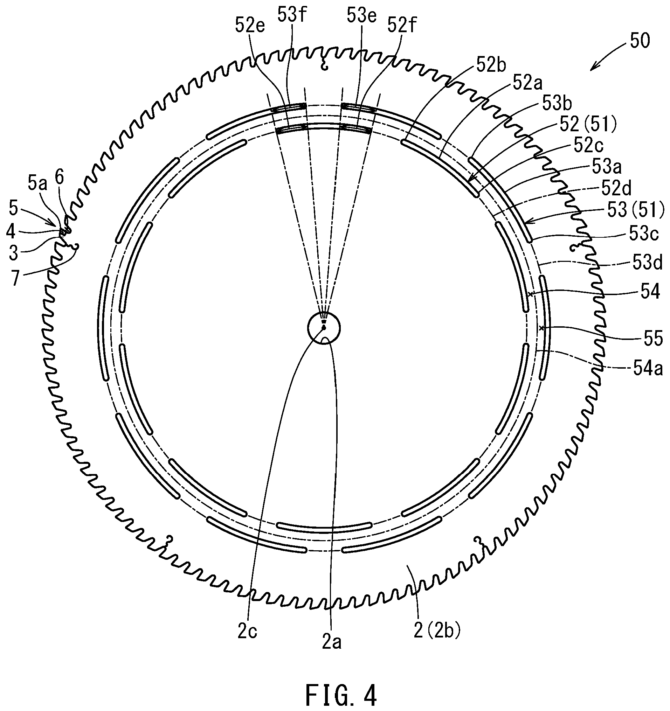

Next, a fourth embodiment of the present disclosure will be described with reference to FIG. 4. Inside the base metal 2 of the disk-shaped rotary tool 50 of the fourth embodiment, a plurality of slits (internal slits) 51 are provided in place of the plurality of slits 10 shown in FIG. 1. In the following description, only the portions different from the first embodiment will be described in detail. The plurality of slits 51 includes a plurality of first slits 52 arranged in the circumferential direction and a plurality of second slits 53 arranged in the circumferential direction radially outward of the plurality of first slits 52. The plurality of first slits 52 and the plurality of second slits 53 are each provided in a quantity of, for example, 10. A first boundary 54a of an imaginary circle centered on the base metal center 2c will be considered on a side surface of the base metal 2. All of the plurality of first slits 52 are arranged in a first annular zone 54 located radially inward of the first boundary 54a. All of the plurality of second slits 53 are arranged in a second annular zone 55 located radially outward of the first boundary 54a.

As shown in FIG. 4, the first slit 52 has a slit body 52a extending in an arc shape in the circumferential direction. All of the slit bodies 52a of the plurality of first slits 52 are arranged on the same first imaginary circle 52d centered on the base metal center 2c. The width of the slit body 52a may be, for example, 1.0 mm to 10.0 mm, for example a constant width of 4.0 mm. The diameter of the first imaginary circle 52d may be, for example, 65% to 85% of the outer diameter of the disk-shaped rotary tool 50, for example 72%. The subtended angle of one first slit 52 centered on the base metal center 2c may be, for example, 20° to 35°, for example 27°. The slit body 52a extends in the circumferential direction over a length of 70% or more of the entire circumferential length of the first slit 52. The slit body 52a extends in the circumferential direction over a length of, for example, 99% or less of the entire circumferential length of the first slit 52. The plurality of first slits 52 are provided at predetermined intervals on the first imaginary circle 52d.

As shown in FIG. 4, the first slit 52 has an arcuate end portion 52b at the rear end in the rotation direction of the slit body 52a. The first slit 52 has an arcuate end portion 52c at the front end in the rotation direction of the slit body 52a. The arcuate end portions 52b and 52c are formed in a semicircular shape with a diameter substantially equal to the width of the slit body 52a. The slit body 52a and the arcuate end portions 52b and 52c may or may not be filled with resin for enhancing vibration damping properties.

As shown in FIG. 4, the second slit 53 has a slit body 53a extending in an arc shape in the circumferential direction. All of the slit bodies 53a of the plurality of second slits 53 are arranged on the same second imaginary circle 53d centered on the base metal center 2c. The width of the slit body 53a may be, for example, 1.0 mm to 10.0 mm, for example a constant width of 4.0 mm. The diameter of the second imaginary circle 53d may be, for example, 70% to 90% of the outer diameter of the disk-shaped rotary tool 50, for example 80%. The subtended angle of one second slit 53 centered on the base metal center 2c may be, for example, 20° to 35°, for example 27°. The slit body 53a extends in the circumferential direction over a length of 70% or more of the entire circumferential length of the second slit 53. The slit body 53a extends in the circumferential direction over a length of, for example, 99% or less of the entire circumferential length of the second slit 53. The plurality of second slits 53 are provided at predetermined intervals on the second imaginary circle 53d.

As shown in FIG. 4, the second slit 53 has an arcuate end portion 53b at the rear end in the rotation direction of the slit body 53a. The second slit 53 has an arcuate end portion 53c at the front end in the rotation direction of the slit body 53a. The arcuate end portions 53b and 53c are formed in a semicircular shape with a diameter substantially equal to the width of the slit body 53a. The slit body 53a and the arcuate end portions 53b and 53c may or may not be filled with resin for enhancing vibration damping properties.

As shown in FIG. 4, the first slit 52 and the second slit 53 are arranged so as to radially overlap with each other. The first slit 52 radially overlaps with a region of the overlapping width 53f including the arcuate end portion 53c at the front end in the rotation direction of the second slit 53, in a region of the overlapping width 52e including the arcuate end portion 52b at the rear end in the rotation direction. The first slit 52 radially overlaps with a region of the overlapping width 53e including the arcuate end portion 53b at the rear end in the rotation direction of the second slit 53, in a region of the overlapping width 52f including the arcuate end portion 52c at the front end in the rotation direction. The sum of the overlapping widths 52e and 52f of the first slit 52 may be, for example, an angle of 1/3 to 1/1 of the central angle of the first slit 52, more preferably an angle of 1/2 to 4/5, for example an angle of 2/3. The sum of the overlapping widths 53e and 53f of the second slit 53 may be, for example, an angle of 1/3 to 1/1 of the central angle of the second slit 53, more preferably an angle of 1/2 to 4/5, for example an angle of 2/3.

As shown in FIG. 4, the average of the total sum of the central angles of the plurality of first slits 52 and the total sum of the central angles of the plurality of second slits 53 is 180° or more, more preferably 235° to 300°.

As shown in FIG. 4, at least one of either the first slit 52 or the second slit 53 is arranged in any region over the entire circumferential length of the base metal 2 centered on the base metal center 2c. Therefore, when an imaginary line extending radially from the base metal center 2c to the outer peripheral edge 2b of the base metal 2 is drawn, at least one slit 51 extends across the imaginary line.

According to the disk-shaped rotary tool 50 described above, the same effects as those of the disk-shaped rotary tool 1 shown in FIG. 1 are achieved. Furthermore, as shown in FIG. 4, each of the plurality of first slits 52 and each of the plurality of second slits (other slits) 53 has a slit body 52a, 53a with a width of 1.0 mm to 10.0 mm and arcuate end portions 52b, 52c, 53b, 53c with a diameter substantially equal to the width of the slit bodies 52a, 53a. By providing the arcuate end portions 52b, 52c, 53b, 53c at the ends of the slits 51, stress concentration at the ends of the slits 51 may be suppressed, thereby suppressing the occurrence of cracks. Furthermore, by providing through-holes with a width through which chips can pass without filling the slits 51 with resin or the like, deformation of the base metal 2 due to chips clogging in the disk-shaped rotary tool 50 may be suppressed.

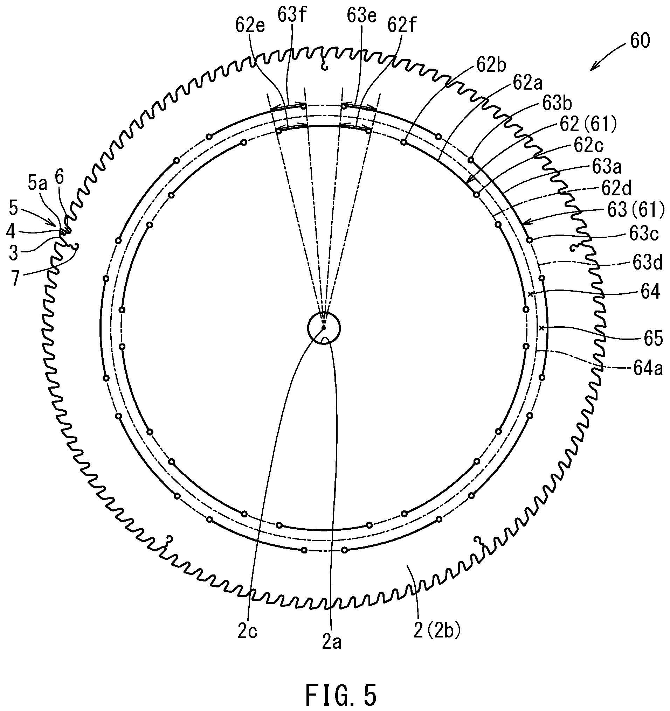

Next, a fifth embodiment of the present disclosure is shown in FIG. 5. Inside the base metal 2 of the disk-shaped rotary tool 60 of the fifth embodiment, a plurality of slits (internal slits) 61 are provided in place of the plurality of slits 10 shown in FIG. 1. The plurality of slits 61 includes a plurality of first slits 62 arranged in the circumferential direction and a plurality of second slits 63 arranged in the circumferential direction radially outward of the plurality of first slits 62.

As shown in FIG. 5, the first slit 62 has an arcuate end portion 62b at the rear end in the rotation direction of the slit body 62a. The first slit 62 has an arcuate end portion 62c at the front end in the rotation direction of the slit body 62a. The second slit 63 has an arcuate end portion 63b at the rear end in the rotation direction of the slit body 63a. The second slit 63 has an arcuate end portion 63c at the front end in the rotation direction of the slit body 63a. The arcuate end portions 62b, 62c, 63b, and 63c are provided as circular holes with a diameter larger than the width of the slit bodies 62a and 63a. The diameter of the arcuate end portions 62b, 62c, 63b, and 63c may be, for example, 1.0 mm to 10.0 mm, more preferably 2.0 mm to 4.0 mm, for example 2.0 mm. According to the disk-shaped rotary tool 60 described above, even when the arcuate end portions 62b, 62c, 63b, and 63c are circular holes, the same effects as those of the disk-shaped rotary tool 1 shown in FIG. 1 are achieved.

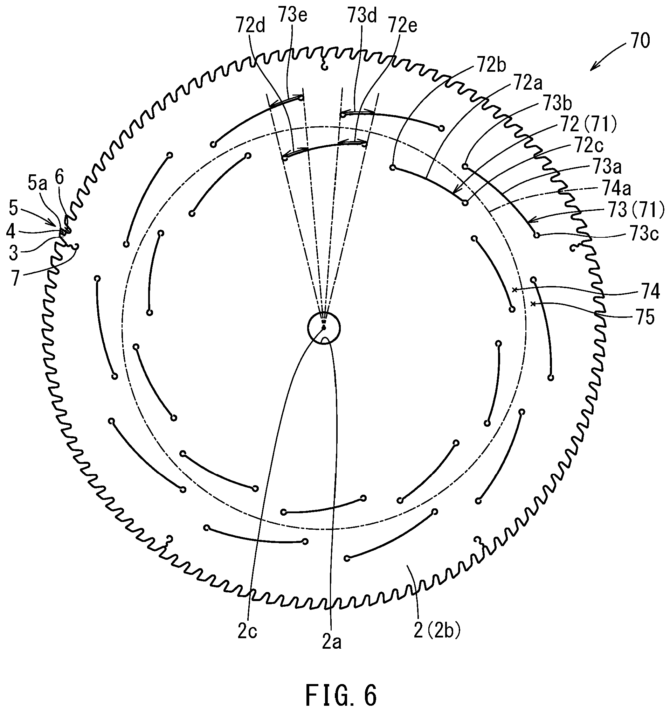

Next, a sixth embodiment of the present disclosure is shown in FIG. 6. Inside the base metal 2 of the disk-shaped rotary tool 70 of the sixth embodiment, a plurality of slits (internal slits) 71 are provided in place of the plurality of slits 10 shown in FIG. 1. The plurality of slits 71 includes a plurality of first slits 72 arranged in the circumferential direction and a plurality of second slits 73 arranged in the circumferential direction radially outward of the plurality of first slits 72. All of the plurality of first slits 72 are arranged in a first annular zone 74 located radially inward of a first boundary 74a of an imaginary circle centered on the base metal center 2c. All of the plurality of second slits 73 are arranged in a second annular zone 75 located radially outward of the first boundary 74a.

As shown in FIG. 6, the first slit 72 has a slit body 72a extending in an arc shape substantially in the circumferential direction. The slit body 72a is inclined radially inward from the front toward the rear in the rotation direction. The second slit 73 has a slit body 73a extending in an arc shape substantially in the circumferential direction. The slit body 73a is inclined radially inward from the front toward the rear in the rotation direction. According to the disk-shaped rotary tool 70 described above, the same effects as those of the disk-shaped rotary tool 1 shown in FIG. 1 are achieved.

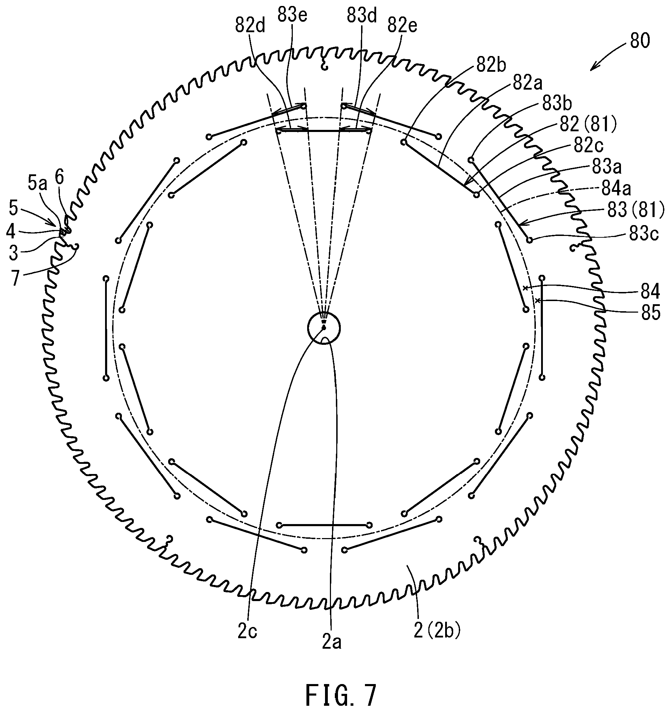

Next, a seventh embodiment of the present disclosure is shown in FIG. 7. Inside the base metal 2 of the disk-shaped rotary tool 80 of the seventh embodiment, a plurality of slits (internal slits) 81 are provided in place of the plurality of slits 10 shown in FIG. 1. In the following description, the plurality of slits 81 includes a plurality of first slits 82 arranged in the circumferential direction and a plurality of second slits 83 arranged in the circumferential direction radially outward of the plurality of first slits 82. All of the plurality of first slits 82 are arranged in a first annular zone 84 located radially inward of a first boundary 84a of an imaginary circle centered on the base metal center 2c. All of the plurality of second slits 83 are arranged in a second annular zone 85 located radially outward of the first boundary 84a.

As shown in FIG. 7, the first slit 82 has a slit body 82a extending linearly. The slit body 82a is perpendicular to the radial direction at the circumferential center. The second slit 83 has a slit body 83a extending linearly. The slit body 83a is perpendicular to the radial direction at the circumferential center. According to the disk-shaped rotary tool 80 described above, the same effects as those of the disk-shaped rotary tool 1 shown in FIG. 1 are achieved.

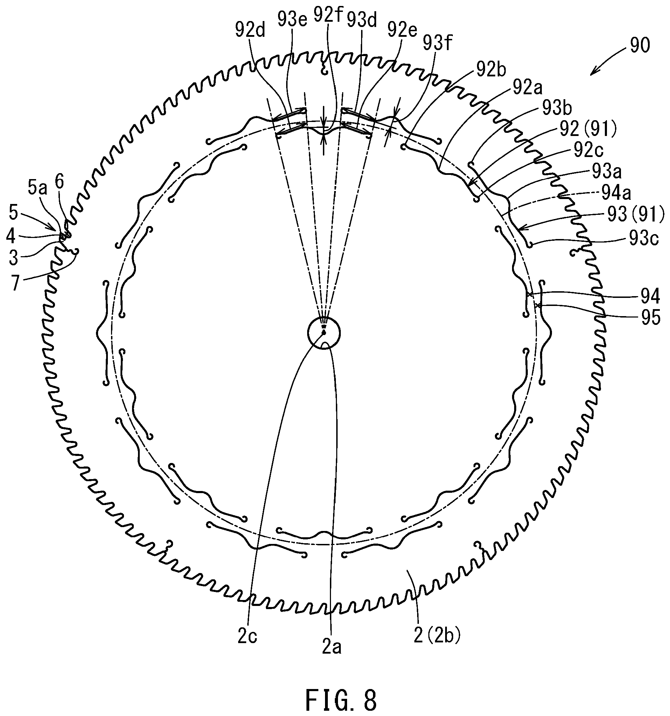

Next, an eighth embodiment of the present disclosure is shown in FIG. 8. Inside the base metal 2 of the disk-shaped rotary tool 90 of the eighth embodiment, a plurality of slits (internal slits) 91 are provided in place of the plurality of slits 10 shown in FIG. 1. The plurality of slits 91 includes a plurality of first slits 92 arranged in the circumferential direction and a plurality of second slits 93 arranged in the circumferential direction radially outward of the plurality of first slits 92. All of the plurality of first slits 92 are arranged in a first annular zone 94 located radially inward of a first boundary 94a of an imaginary circle centered on the base metal center 2c. All of the plurality of second slits 93 are arranged in a second annular zone 95 located radially outward of the first boundary 94a.

As shown in FIG. 8, the first slit 92 has a slit body 92a extending substantially in the circumferential direction. The slit body 92a is provided in a shape that meanders in a wave-like manner in the radial direction. The slit body 92a is substantially perpendicular to the radial direction at the circumferential center. The second slit 93 has a slit body 93a extending substantially in the circumferential direction. The slit body 93a is provided in a shape that meanders in a wave-like manner in the radial direction. The slit body 93a is substantially perpendicular to the radial direction at the circumferential center. According to the disk-shaped rotary tool 90 described above, the same effects as those of the disk-shaped rotary tool 1 shown in FIG. 1 are achieved.

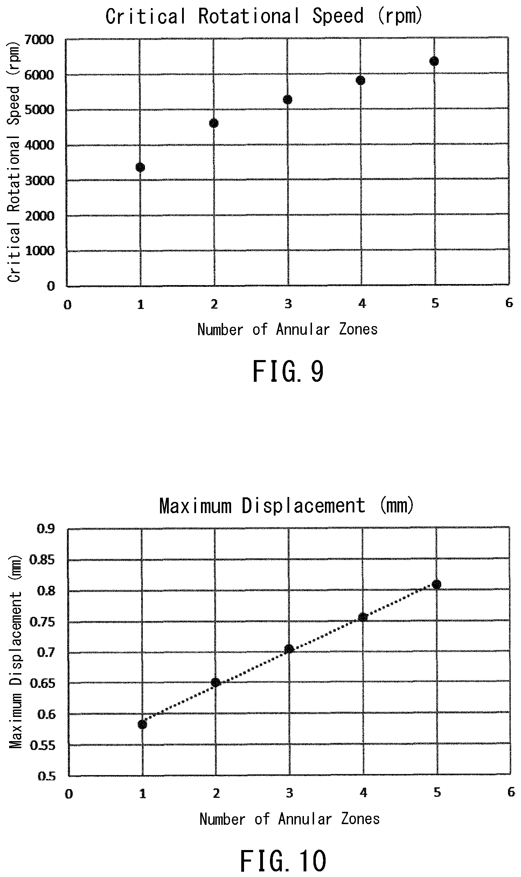

As shown in FIGS. 9 to 14, static analysis and modal analysis simulations were performed on the disk-shaped rotary tools of the present disclosure. In the static analysis, the maximum von Mises stress and the maximum displacement generated in the base metal 2 when stress was applied in the axial direction of the base metal 2 at the tip end of the tooth body 3 were evaluated. The critical rotational speed of the base metal 2 was calculated from the modal analysis.

As shown in FIGS. 9 and 10, the critical rotational speed and maximum displacement of the base metal were evaluated when the number of annular zones in which rows of slits arranged in the circumferential direction were stacked in the radial direction was changed. For example, when the number of annular zones is 2, this corresponds to the disk-shaped rotary tool 1 or the like shown in FIG. 1. For example, when the number of annular zones is 3, this corresponds to the disk-shaped rotary tool 20 or the like shown in FIG. 2. For example, when the number of annular zones is 4, this corresponds to the disk-shaped rotary tool 40 or the like shown in FIG. 3. In the analysis, the maximum displacement of the base metal increased linearly with increasing number of annular zones.

As shown in FIGS. 9 and 10, the critical rotational speed of the base metal increased as the number of annular zones increased, but the amount of increase decreased as the number of annular zones increased. Considering the desire to maximize the critical rotational speed of the base metal and minimize the maximum displacement of the base metal, the preferred range of the number of annular zones was determined to be 2 to 4 layers.

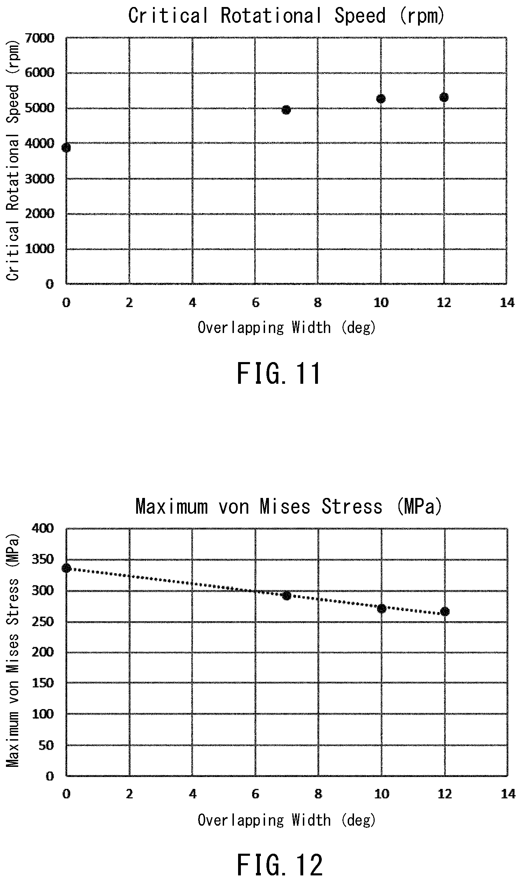

As shown in FIGS. 11 and 12, the critical rotational speed and maximum von Mises stress of the base metal were evaluated when the overlapping width at which the first slit and the other slits radially overlap was changed. The overlapping width is expressed as the angle centered on the base metal center at which one first slit radially overlaps with the other slits. For example, an overlapping width of 0° indicates a state in which the first slit and the other slits do not radially overlap at all.

As shown in FIGS. 11 and 12, the maximum von Mises stress generated in the base metal decreased linearly with increasing overlapping width in the analyzed range. The critical rotational speed of the base metal increased as the overlapping width increased, but the amount of increase decreased as the overlapping width increased. In particular, the amount of increase in critical rotational speed was small when the overlapping width was increased from 10° to 12°. Considering the desire to achieve relatively large increase in critical rotational speed of the base metal and minimize the maximum von Mises stress of the base metal, the preferred range of overlapping width is 1/6 to 1/2 of the entire circumferential length of the slit, and the more preferred range of overlapping width is 1/4 to 2/5 of the entire circumferential length of the slit.

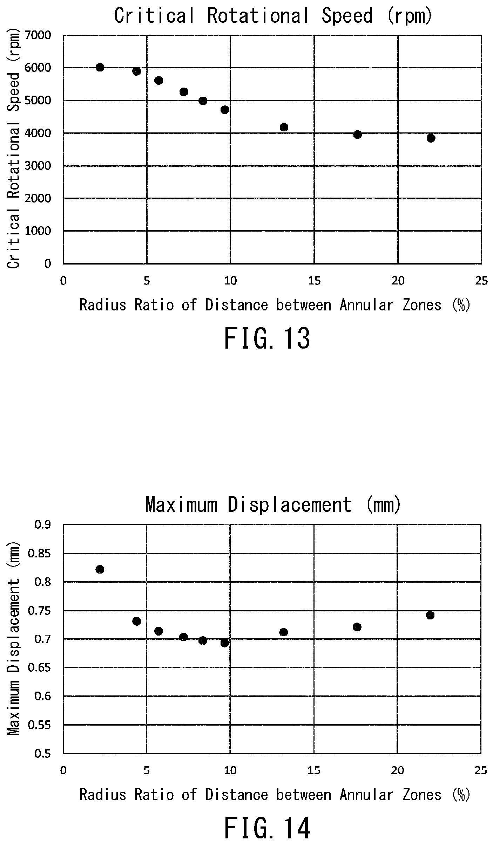

As shown in FIGS. 13 and 14, the critical rotational speed and maximum displacement of the base metal were evaluated when the ratio of the difference in radii between the first imaginary circle and the other imaginary circles (distance between annular zones) to the radius of the outer periphery of the disk-shaped rotary tool was changed. As shown in FIG. 13, while the critical rotational speed of the base metal increased as the ratio of the difference in radii between the first imaginary circle and the other imaginary circles to the radius of the outer periphery of the disk-shaped rotary tool decreased, there was little change below 4%. As shown in FIG. 14, the maximum displacement of the base metal increased markedly when the ratio of the difference in radii between the first imaginary circle and the other imaginary circles to the radius of the outer periphery of the disk-shaped rotary tool fell below 4%, and also increased when it exceeded 15%. From the above, considering the desire to maximize the critical rotational speed of the base metal and minimize the displacement of the base metal, the preferred range of the ratio of the difference in radii between the first imaginary circle and the other imaginary circles to the radius of the outer periphery of the disk-shaped rotary tool is 4% to 15%.

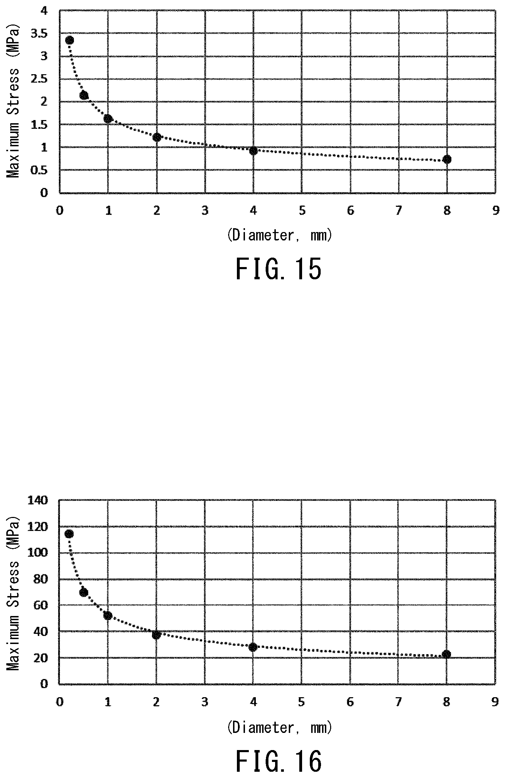

As shown in FIGS. 15 and 16, simulations were performed to analyze the maximum stress generated in the base metal when the diameter of the arcuate end portions of the disk-shaped rotary tool of the present disclosure was changed. The slit was configured as a linear shape extending straight in the lateral direction with a width of 0.2 mm and a length including the arcuate end portions of 30 mm, with circular-hole arcuate end portions provided at both ends of the slit.

FIG. 15 shows the maximum stress generated in the base metal when a constant force is applied to the base metal in a direction perpendicular to the slit on the plane of the base metal. This simulates the centrifugal force generated during high-speed rotation of the base metal. In the analysis, while the maximum stress generated in the base metal decreased as the diameter of the arcuate end portions increased, the amount of decrease decreased as the diameter of the arcuate end portions increased. In particular, the decrease in tensile stress was reduced in the range where the diameter of the arcuate end portions was larger than 4.0 mm.

FIG. 16 shows the maximum stress generated in the base metal when the base metal is fixed and a constant force is applied in the thickness direction. This simulates the axial bending load received from the workpiece during high-speed rotation of the base metal. In the analysis, while the bending load generated in the base metal decreased as the diameter of the arcuate end portions increased, the amount of decrease decreased as the diameter of the arcuate end portions increased. In particular, the decrease in tensile stress was reduced in the range where the diameter of the arcuate end portions was larger than 4.0 mm. From the above, the preferred range of the diameter of the arcuate end portions is 2.0 mm to 4.0 mm.

Through each of the above analyses, the shape, arrangement, and other aspects of the slits that can increase the critical rotational speed and improve the rigidity of the base metal may be determined. Based on these determination results, the disk-shaped rotary tool of each embodiment of the present disclosure may be provided.

Various modifications may be made to the disk-shaped rotary tool of each embodiment described above. A tipped saw blade on which a plurality of tips 5 are mounted was illustrated as an example of the disk-shaped rotary tool. Instead, the present disclosure may be applied to, for example, a circular saw blade in which a cutting edge is directly provided at the tip end of the tooth body 3. For example, the present disclosure may be applied to a disk-shaped rotary tool other than a tipped saw blade or a circular saw blade.

A configuration in which 10 or 12 each of the first slit and the other slits are provided was illustrated as an example. Instead, for example, the first slit and the other slits may each be provided in any number in the range of 6 to 14. A configuration in which the first slit and the other slits are provided in equal numbers was illustrated as an example. Instead, the first slit and the other slits may be provided in different numbers, as long as the condition that at least one slit is present over the entire circumferential length of the base metal is satisfied.

FIGS. 2 and 3 illustrate disk-shaped rotary tools in which the third slits 24 and 44 substantially completely radially overlap with the first slits 22 and 42. FIG. 3 illustrates a disk-shaped rotary tool in which the fourth slit 45 substantially completely radially overlaps with the second slit. Instead, for example, the first slit and the third slit may have regions where they do not radially overlap with each other. For example, the second slit and the fourth slit may have regions where they do not radially overlap with each other.

FIGS. 1 to 8 illustrate a configuration in which the overlapping width of the first slit with the other slits is substantially the same at both the front end in the rotation direction and the rear end in the rotation direction. Instead, the overlapping width at the front end in the rotation direction and the overlapping width at the rear end in the rotation direction may be different from each other. FIGS. 1 to 8 illustrate a configuration in which the slits are arranged so that the radial spacing between the imaginary circles is substantially constant. Instead, the radial spacing between the imaginary circles need not be constant.

FIGS. 1 to 8 illustrate a configuration in which arcuate end portions are provided at both ends of the slit body. Instead, for example, an arcuate end portion may be provided only at the front end in the rotation direction of the slit body. For example, an arcuate end portion may be provided only at the rear end in the rotation direction of the slit body. FIGS. 1 to 3 and FIGS. 6 to 8 illustrate substantially C-shaped arcuate end portions opening on the radially inner side or the radially outer side. The opening direction of each arcuate end portion may be changed as appropriate. For example, FIGS. 1 to 3 and FIGS. 6 to 8 illustrate a configuration in which all of the first slits have arcuate end portions opening on the radially inner side. Instead, the opening direction of the arcuate end portions may differ for each slit. For example, FIGS. 1 to 3 and FIGS. 6 to 8 illustrate a configuration in which the arcuate end portions at both ends of one slit open in the same direction. Instead, the arcuate end portions at both ends of one slit may open in mutually different directions. One of the arcuate end portions at both ends of the slit may be replaced, for example, with a circular hole.

FIG. 6 illustrates a disk-shaped rotary tool 70 having a plurality of slits 71 inclined radially inward from the front toward the rear in the rotation direction. Instead, for example, the plurality of slits may be inclined radially outward from the front toward the rear in the rotation direction. For example, the first slit and the other slits may have mutually different inclination directions.

FIGS. 1 to 8 illustrate a configuration in which the plurality of slits provided in one disk-shaped rotary tool have the same shape. Instead, for example, a plurality of types of slit shapes may be mixed, such as using the shape of the slit 10 of the first embodiment for the first slit, the shape of the slit 51 of the fourth embodiment for the second slit, and the shape of the slit 61 of the fifth embodiment for the third slit.

## Claims

1. A disk-shaped rotary tool comprising:
a plurality of slits provided in a disk-shaped base metal,
wherein the plurality of slits includes:
a plurality of first slits elongated in a circumferential direction and arranged in the circumferential direction within a first annular zone of the base metal, and not radially overlapping with each other; and
a plurality of other slits arranged within other annular zones so as to radially overlap with or be in contact with both ends of each of the plurality of first slits, and
wherein at least one of the slits is present over an entire circumferential length of the base metal.

2. The disk-shaped rotary tool according to claim 1, wherein the base metal has 2 to 4 layers of annular zones arranged in a radial direction, and a plurality of slits are formed in each annular zone.

3. The disk-shaped rotary tool according to claim 1 or 2, wherein:
each of the plurality of first slits has a slit body located on and extending along a common first imaginary circle; and
each of the plurality of other slits has a slit body located on and extending along a common other imaginary circle.

4. The disk-shaped rotary tool according to claim 1 or 2, wherein each of both circumferential ends of the plurality of other slits radially overlaps with the corresponding first slit over an angle corresponding to between 1/3 and the entirity of a central angle of the corresponding first slit.

5. The disk-shaped rotary tool according to claim 1 or 2, wherein each of the plurality of first slits and each of the plurality of other slits has a slit body with a width of 2.0 mm or less and an arcuate end portion with a diameter larger than the width of the slit body.

6. The disk-shaped rotary tool according to claim 1 or 2, wherein each of the plurality of first slits and each of the plurality of other slits has a slit body with a width of 1.0 mm to 10.0 mm and an arcuate end portion with a diameter substantially equal to the width of the slit body.
